# EUROPÄISCHE PATENTANMELDUNG

(11) **EP 2 025 983 A2**
(43) Veröffentlichungstag der Anmeldung: **18.02.2009**
(21) Anmeldenummer: 08012811.9
(22) Anmeldetag: 16.07.2008
(51) Int. Cl.: F16K 31/04

(54) **Anordnung zum Verstellen eines Ventils**

(30) Priorität: 16.08.2007 DE 102007038641
(71) Anmelder: Möhlenhoff Wärmetechnik GmbH, 38229 Salzgitter (DE)
(72) Erfinder: Geburek, Frank, Dipl.-Ing., 31162 Bad Salzdethfurt (DE); Seelmann, Christian, 31174 Schellerten (DE)
(74) Vertreter: Döring, Roger

(57) **Zusammenfassung**

Es wird eine Anordnung zum Verstellen eines Ventils angegeben, das einen unter der Wirkung einer Rückstellfeder stehenden Stößel aufweist, bei welcher in einem am Ventil anzubringenden Gehäuse (9) ein temperaturabhängiges, mit einem Arbeitskolben (13) zusammenwirkendes Stellelement angeordnet ist. Das Stellelement ist als aus einer Legierung mit einprägbarem Formgedächtnis bestehendes metallisches Bauteil (11) ausgebildet und zwischen zwei Endstellungen verstellbar, welche der Offenstellung des Ventils einerseits und dessen Schließstellung andererseits entsprechen. Das metallische Bauteil (11) nimmt bei Erwärmung in seiner ersten Endstellung eine dem eingeprägten Formgedächtnis entsprechende Form ein. In dem Gehäuse (9) ist außerdem eine auf das metallische Bauteil einwirkende Druckfeder (12) angebracht, durch welche dasselbe bei Fortfall der Erwärmung in seiner zweiten Endstellung gehalten ist. Zwischen dem Bauteil (11) und der Druckfeder (12) ist ein Federteller (20) aus mechanisch stabilem Kunststoff angeordnet, in dem auf der dem Bauteil (11) zugewandten Seite ein PTC-Widerstand (14) als elektrisches Heizelement integriert ist. Innerhalb des Gehäuses (9) ist eine Schalteinheit (21) zur Begrenzung der Hubbewegung des Arbeitskolbens (13) des Stellelements angebracht, welche aus einem mit dem Federteller (20) gekoppelten beweglichen ersten Teil und einem feststehenden zweiten Teil besteht und welche nach dem Verbinden des PTC-Widerstandes (14) mit einer Spannungsquelle die Stromzufuhr an denselben beim Erreichen einer einem vorgegebenen Hub entsprechenden Position des Arbeitskolbens (13) abschaltet und beim Verlassen dieser Position wieder einschaltet.

## Beschreibung

Die Erfindung bezieht sich auf eine Anordnung zum Verstellen eines Ventils, das einen unter der Wirkung einer Rückstellfeder stehenden Stößel aufweist, bei welcher in einem am Ventil anzubringenden Gehäuse ein temperaturabhängiges, mit einem Arbeitskolben zusammenwirkendes Stellelement angeordnet ist, welches als aus einer Legierung mit einprägbarem Formgedächtnis bestehendes metallisches Bauteil ausgebildet und einschließlich Arbeitskolben in Bewegungsrichtung des Stößels zwischen zwei Endstellungen verstellbar ist, welche der Offenstellung des Ventils einerseits und dessen Schließstellung andererseits entsprechen, bei welcher das metallische Bauteil bei Erwärmung in seiner ersten Endstellung eine dem eingeprägten Formgedächtnis entsprechende Form einnimmt, bei welcher in dem Gehäuse eine auf das metallische Bauteil einwirkende Druckfeder angebracht ist, durch welche dasselbe bei Fortfall der Erwärmung in seiner zweiten Endstellung gehalten ist, bei welcher zwischen dem Bauteil und der Druckfeder ein Federteller aus mechanisch stabilem Kunststoff angeordnet ist, in dem auf der dem Bauteil zugewandten Seite ein PTC-Widerstand als elektrisches Heizelement integriert ist, und bei welcher in Montageposition des Gehäuses der Stößel des Ventils durch axiale Bewegung des Arbeitskolbens in seiner Achsrichtung verstellbar ist (DE 10 2005 045 432 Al).

Eine derartige Anordnung wird beispielsweise in der Heizungs- und Lüftungstechnik eingesetzt. Sie kann grundsätzlich überall dort verwendet werden, wo durch ein Ventil eine Verstellbewegung durchgeführt werden soll. Es können dadurch beispielsweise Klappen bewegt oder lichte Rohrquerschnitte verändert werden, wodurch auch die Durchflußmenge eines durch ein entsprechendes Rohrsystem strömenden bzw. fließenden Mediums verändert werden kann. Ein solches Medium ist beispielsweise Wasser oder Luft.

Aus der DE 197 48 548 A1 gehen ein Verfahren und eine Vorrichtung zur Verstellung des Stößels eines mit einer Rückstellfeder ausgerüsteten Ventils hervor, bei dem bzw. der als Stellelement ein mit einem Arbeitskolben ausgerüsteter, temperaturabhängiger Dehnkörper eingesetzt ist, der von einer Druckfeder mit gegenüber der Rückstellfeder des Ventils größerer Federkraft umgeben ist. Am Dehnungskörper ist als Heizquelle ein mit einer Spannungsquelle verbindbarer elektrischer PTC-Widerstand angebracht. Mit diesem bekannten Verfahren und der entsprechenden Vorrichtung soll der Energieaufwand für den Betrieb des Stellelements vermindert werden. Es wird dabei die Erkenntnis berücksichtigt, daß der maximal mögliche Hub des Arbeitskolbens des Dehnkörpers wesentlich größer als der Weg ist, den der Stößel eines Ventils zwischen seiner Schließstellung einerseits und seiner Offenstellung andererseits zurücklegen muß. Nach dem Anschließen des PTC-Widerstandes an eine Spannungsquelle wird daher die Stromzufuhr an denselben unterbrochen, sobald der Arbeitskolben des durch den PTC-Widerstand erwärmten Dehnkörpers eine vorgegebene Hubbewegung mit einem Hub zurückgelegt hat, der dem Hub entspricht, den der Stößel des Ventils zwischen der Offenstellung und der Schließstellung desselben durchführt. Dazu wird eine innerhalb des Gehäuses der Vorrichtung angeordnete Schalteinheit verwendet, deren einer Teil mit einem den Dehnkörper umgebenden und mit diesem durch den Dehnkörper bewegbaren Käfig gekoppelt ist.

Bei der bekannten Anordnung nach der eingangs erwähnten DE 10 2005 045 432 A1 ist das Stellelement ein aus einer Legierung mit einprägbarem Formgedächtnis bestehendes metallisches Bauteil, das sich im wesentlichen quer zur Bewegungsrichtung des Stößels des Ventils erstreckt. Ein solches Bauteil besteht aus einer Formgedächtnislegierung, die beispielsweise die Komponenten Nickel, Titan und Kupfer enthält. Ein Bauteil aus einer solchen Legierung erhält mit einer speziellen Behandlung unterhalb einer kritischen Temperatur mit bleibender Verformung ein Formgedächtnis mit der Maßgabe eingeprägt, daß es nach einer Verformung aus seiner eingeprägten Form heraus in eine andere Form bei Erwärmung in die eingeprägte Form zurückgeht, und zwar mit erheblicher Kraftentwicklung. Das Bauteil ist einschließlich eines Arbeitskolbens in Bewegungsrichtung des Stößels des Ventils zwischen zwei Endstellungen verstellbar, welche der Offenstellung des Ventils einerseits und dessen Schließstellung andererseits entsprechen. Das metallische Bauteil nimmt bei Erwärmung durch einen elektrischen PTC-Widerstand in seiner ersten Endstellung eine dem eingeprägten Formgedächtnis entsprechende Form ein. Es ist außerdem eine über einen Federteller aus mechanisch stabilem Kunststoff auf das metallische Bauteil einwirkende Druckfeder vorhanden, durch welche dasselbe bei Fortfall der Erwärmung in seiner zweiten Endstellung gehalten ist. Der Energieaufwand zur Betätigung des Stellelements ist insgesamt relativ hoch.

Der Erfindung liegt die Aufgabe zugrunde, die eingangs geschilderte Anordnung so weiterzubilden, daß der Energieaufwand für ihren Betrieb vermindert und eine definierte Bewegung des Stellelements eingestellt werden können.

Diese Aufgabe wird gemäß der Erfindung dadurch gelöst,
- daß innerhalb des Gehäuses in an sich bekannter Weise eine Schalteinheit zur Begrenzung der Hubbewegung des Arbeitskolbens des Stellelements angebracht ist, welche aus einem beweglichen ersten Teil und einem feststehenden zweiten Teil besteht und welche nach dem Verbinden des PTC-Widerstandes mit einer Spannungsquelle die Stromzufuhr an denselben beim Erreichen einer einem vorgegebenen Hub entsprechenden Position des Arbeitskolbens abschaltet und beim Verlassen dieser Position wieder einschaltet, und
- daß der bewegliche erste Teil der Schalteinheit mit dem den PTC-Widerstand tragenden Federteller gekoppelt ist.

Diese Anordnung besteht aus nur wenigen Einzelteilen. Sie ist daher einfach aufgebaut und einfach zu montieren. Durch die Begrenzung des Hubes des vom Stellelement bewegten Arbeitskolbens kann der Energieaufwand für den Betrieb der Anordnung wesentlich verringert werden. Wenn der Arbeitskolben einen Weg zurückgelegt hat, bei dem das zu betätigende Ventil bereits voll geöffnet bzw. vollständig geschlossen ist, wird die Stromzufuhr an den PTC-Widerstand unterbrochen. Es wird dann also keine Energie mehr zugeführt. Im Ergebnis wird mit vorliegender Anordnung trotz des Einsatzes eines Stellelements mit einem Bauteil aus einer Formgedächtnislegierung der gleiche Vorteil wie bei der bekannten Vorrichtung nach der oben erwähnten DE 197 48 548 A1 erzielt, die mit einem in seiner Wirkungsweise seit langem bekannten temperaturabhängigen Dehnkörper arbeitet, dessen Arbeitskolben eine gleichförmige bzw. kontinuierliche Bewegung ausführt.

Das bei dieser Anordnung eingesetzte Bauteil aus der Formgedächtnislegierung läßt eine gleichförmige Bewegung des Arbeitskolbens des Stellelements an sich nicht zu. Durch Erwärmen und Abkühlen findet in einem für eine Formgedächtnislegierung verwendbaren Metall eine sprunghaft auftretende Phasenumwandlung statt. Ohne Zusatzmaßnahmen würde ein aus einer Formgedächtnislegierung bestehendes Bauteil also ungleichförmig bzw. diskontinuierlich zwischen zwei Positionen hin- und herspringen. Es wäre damit insbesondere bei sehr kleinen Verstellwegen, wie sie hier vorliegen, nicht brauchbar. Erst durch das Zusammenwirken des speziellen Bauteils mit der gleichförmig bzw. kontinuierlich zusammendrückbaren und entlastbaren Druckfeder ergibt sich der überraschende Effekt, daß die Bewegung des Bauteils aus der Formgedächtnislegierung ebenfalls gleichförmig bzw. kontinuierlich erfolgt. Vorteilhaft unterstützt wird dieses Verhalten des Bauteils durch den als Heizelement eingesetzten PTC-Widerstand, der über den Federteller von der Druckfeder gegen das Bauteil gedrückt wird. Dadurch werden eine schnelle Erwärmung aber auch eine ebenso schnelle Abkühlung des Bauteils ermöglicht. Durch diese Tatsache wird es möglich, bei dieser Anordnung eine auf kontinuierliche Änderungen ansprechende Schalteinheit einzusetzen, mit welcher der Weg des Stellelements im angegebenen Sinne begrenzt und definiert eingestellt werden kann.

Ausführungsbeispiele des Erfindungsgegenstandes sind in den Zeichnungen dargestellt.

Es zeigen:
Fig. 1 in schematischer Darstellung eine an einem Ventil befestigte Anordnung nach der Erfindung.
Fig. 2 einen auf einem Ventil montierten Halter.
Fig. 3 und 4 Schnitte durch eine Anordnung nach Fig. 1 in zwei unterschiedlichen Positionen in vergrößerter Darstellung.
Fig. 5 bis 9 unterschiedliche, in der Anordnung verwendbare Schalteinheiten in schematischen Darstellungen.

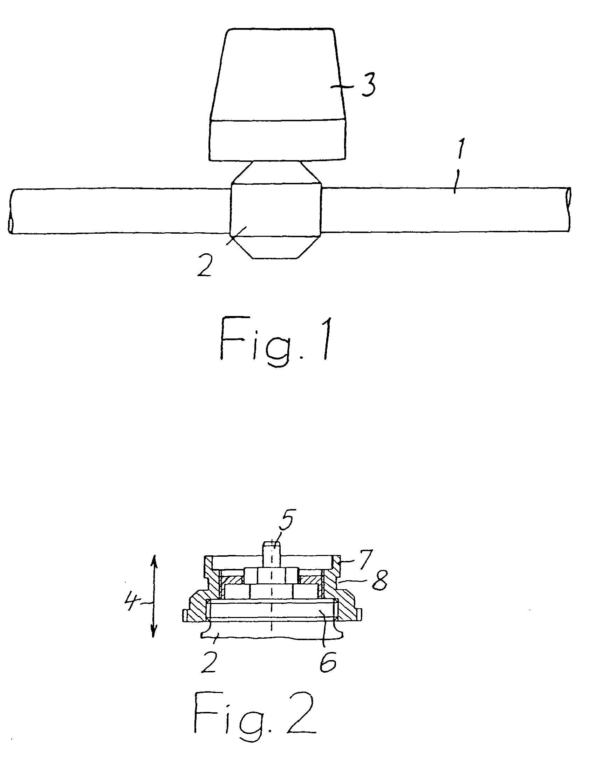

Gemäß Fig. 1 ist in einer Rohrleitung 1, in der beispielsweise Heizungswasser geführt wird, ein Ventil 2 angeordnet. An dem Ventil 2 ist eine Anordnung 3 angebracht, mit der die Stellung des Ventils 2 temperaturabhängig gesteuert werden kann. Das Ventil 2 hat gemäß Fig. 2 einen in Richtung des Doppelpfeils 4 durch eine nicht dargestellte Rückstellfeder beaufschlagten Stößel 5, der zwischen zwei Endstellungen verstellbar ist.

Konzentrisch zum Stößel 5 kann ein Gewindestutzen 6 angebracht sein, auf den hier ein aus Kunststoff bestehender Halter 7 aufgeschraubt ist. Er hat an seiner Umfangsfläche eine in bevorzugter Ausführungsform umlaufende, nutförmige Vertiefung 8, in welche in Montageposition einrastende Verriegelungselemente der Anordnung 3 eingreifen können. Die Anordnung 3 kann aber auch auf andere Art und Weise am Ventil 2 befestigt werden.

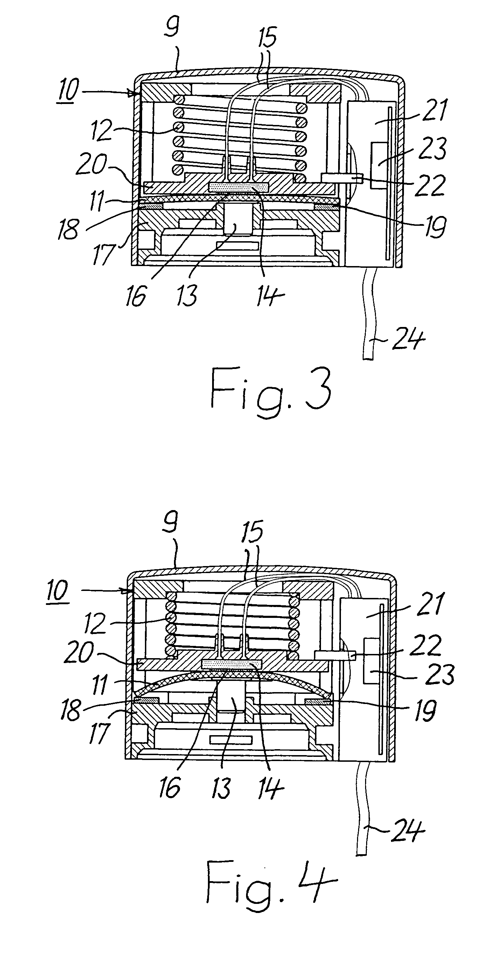

Die Anordnung zum Verstellen des Ventils 2 weist gemäß den Fig. 3 und 4 ein vorzugsweise aus einem stabilen Kunststoff bestehendes Gehäuse 9 auf, das auf das Ventil 2 wie beschrieben aufgesetzt werden kann. In dem Gehäuse 9 ist ein Einsatz 10 mit einem metallischen Bauteil 11 als Stellelement und einer Druckfeder 12 angeordnet. Die Druckfeder 12 ist in den Fig. 3 und 4 als Zylinderfeder dargestellt. Sie kann auch als Kegelfeder ausgeführt sein.

Das Bauteil 11 erstreckt sich im wesentlichen quer zur Bewegungsrichtung des Stößels 5 des Ventils 2. Es kann mit Vorteil als rechteckiger Streifen ausgebildet sein, vergleichbar mit einer Blattfeder. Das Bauteil 11 benötigt somit - bis auf einen für seine noch zu schildernde Bewegung benötigten Raum - innerhalb des Einsatzes 10 nur wenig Platz, so daß es zur Bauhöhe der gesamten Anordnung nur wenig beiträgt. Am Bauteil 11 ist gemäß den Fig. 3 und 4 ein durch dasselbe in seiner Achsrichtung verstellbarer Arbeitskolben 13 angebracht. Auf der gegenüberliegenden Seite des Bauteils 11 befindet sich ein als Heizelement dienender elektrischer PTC-Widerstand 14, der über eine Zuleitung 15 an eine Strom- bzw. Spannungsquelle anschließbar ist. Zwischen dem Bauteil 11 und dem PTC-Widerstand 14 kann beispielsweise eine aus der DE 102 20 682 A1 bekannte, wärmeleitende Zwischenlage 16 aus Isoliermaterial angebracht sein.

Zum Einsatz 10 gehört auch ein Grundkörper 17 zum Aufsetzen des Gehäuses 9 auf das Ventil 2, in dem der Arbeitskolben 13 geführt ist und auf dem das Bauteil 11 abgestützt ist. Es liegt im dargestellten Ausführungsbeispiel mit seinen Enden auf zwei Gleitstücken 18 und 19 aus Kunststoff auf, die am Grundkörper 17 anliegen und auf demselben gleiten können. Die Druckfeder 12 liegt einerseits am Einsatz 10 selbst und andererseits an einem Federteller 20 an, der im Einsatz 10 in Richtung der Achse der Druckfeder 12 verschiebbar geführt ist und selbst am Bauteil 11 anliegt. Der Federteller 20 besteht aus einem mechanisch stabilen Kunststoff, wie beispielsweise Polyphenylsulfon. Der PTC-Widerstand 14 ist im Federteller 20 integriert.

Die Anordnung nach der Erfindung in der Ausführungsform der Fig. 3 und 4 arbeitet beispielsweise wie folgt:

Die Anordnung mit Gehäuse 9 und Inhalt ist auf ein Ventil 2 aufgesetzt, welches bei der Position der Anordnung nach Fig. 3 geschlossen ist. Dabei ist das Bauteil 11 von der Druckfeder 12 mittels des Federtellers 20 nach unten gedrückt worden. Das Bauteil 11 hat dabei den Arbeitskolben 13 mitgenommen, durch welchen der Stößel 5 des Ventils 2 (Fig. 2) in Schließstellung gebracht worden ist. Die Federkraft der Druckfeder 12 muß also größer als die Federkraft der Rückstellfeder des Ventils 2 zuzüglich der Kraft sein, die zur Verformung des Bauteils 11 erforderlich ist. Der PTC-Widerstand 14 erzeugt in dieser Position keine Wärme.

Zum Öffnen des Ventils 2 wird der PTC-Widerstand 14 an eine Strom- bzw. Spannungsquelle angeschlossen und dadurch erwärmt. Durch die vom PTC-Widerstand 14 abgegebene Wärme wird das Bauteil 11 erwärmt, das daraufhin in seine aus Fig. 4 ersichtliche eingeprägte Gedächtnisform zurückgeht. Es entwickelt dabei eine ausreichende Kraft, um die Federkraft der Druckfeder 12 zu überwinden und diese nach und nach zusammenzudrücken. Unterstützt wird die Bewegung des Bauteils 11 durch die in der gleichen Richtung wirkende Rückstellfeder des Ventils 2, dessen Stößel 5 gegen den Arbeitskolben 13 drückt. Wenn das Ventil 2 wieder geschlossen werden soll, braucht nur die Stromzufuhr an den PTC-Widerstand 14 abgebrochen zu werden. Die Druckfeder 12 drückt das Bauteil 11 einschließlich Arbeitskolben 13 dann in seine aus Fig. 3 ersichtliche Lage zurück.

Der Stößel 5 des Ventils 2 braucht zwischen dessen Schließstellung nach Fig. 3 und seiner Offenstellung nach Fig. 4 nur um eine kurze Strecke von maximal 4 mm bewegt zu werden. Dieser Hubweg wird von dem aus einer Formgedächtnislegierung bestehenden Bauteil 11 durch das Zusammenwirken seiner mit der Druckfeder 12 und dem PTC-Widerstand 14 in beiden Richtungen gleichförmig bzw. kontinuierlich zurückgelegt. Dabei wird der Hub des Arbeitskolbens 13 des Bauteils 11 durch eine Schalteinheit 21 begrenzt, die in den Fig. 3 und 4 nur schematisch angedeutet ist. Sie ist ebenso wie die anderen Teile der Anordnung im Gehäuse 9 derselben untergebracht und besteht prinzipiell aus einem mit dem Federteller 20 gekoppelten und dadurch beweglichen Weggeber 22 und einem Wegaufnehmer 23. Die Schalteinheit 21 kann über eine elektrische Leitung 24 mit einer Auswerteelektronik verbunden sein.

In der in Fig. 4 dargestellten Endstellung ist der Hub des Arbeitskolbens 13 auf einen Wert begrenzt, der kleiner als sein Maximalhub ist. Der begrenzte Hub des Arbeitskolbens 13 entspricht dem Hub, den der Stößel 5 des Ventils 2 zwischen seiner Offenstellung und seiner Schließstellung zurücklegt. Zur Hubbegrenzung für den Arbeitskolben 13 wird die Schalteinheit 21 verwendet, welche die Stromzufuhr an den PTC-Widerstand 14 unterbricht, sobald die Arbeitskolben 13 die entsprechende Position erreicht hat.

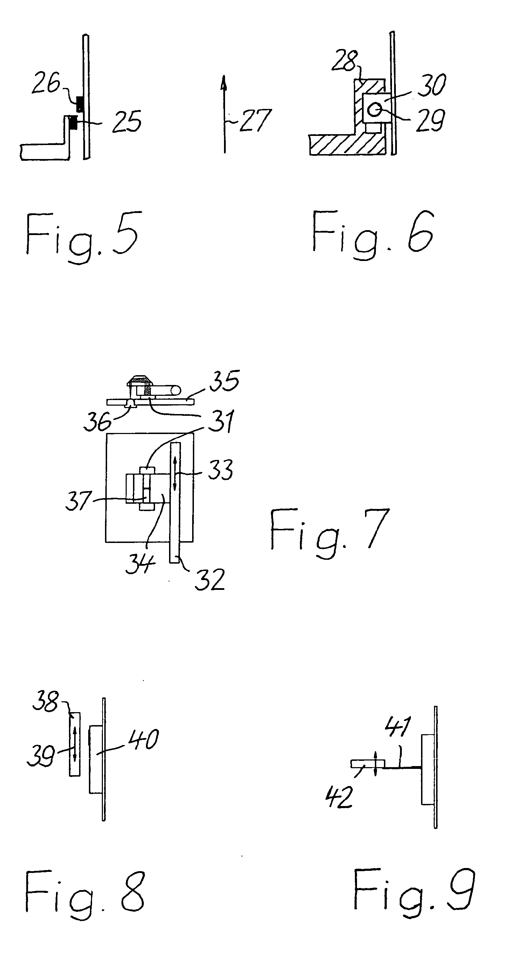

Mögliche Ausführungsformen der Schalteinheit 21 gehen aus den Fig. 5 bis 9 hervor:

Die Schalteinheit 21 hat gemäß Fig. 5 beispielsweise zwei elektrische Kontakte 25 und 26 als Weggeber 22 und Wegaufnehmer 23, die einander in der hubbegrenzten Position des Arbeitskolbens 13 berühren. Dazu ist der Kontakt 25 als beweglicher Kontakt fest mit dem Federteller 20 verbunden. Der feststehende Kontakt 26 ist am Gehäuse 9 der Anordnung angebracht. In der in Fig. 5 dargestellten Position berühren die Kontakte 25 und 26 einander nicht. Wenn der Stromkreis des PTC-Widerstandes 14 geschlossen wird, wird der Kontakt 25 zusammen mit dem Federteller 20 in Richtung des Pfeiles 27 bewegt. Sobald er den feststehenden Kontakt 26 berührt, wird der Stromkreis des PTC-Widerstandes 14 unterbrochen, so daß derselbe nicht mehr erwärmt wird. Das geschieht in der Auswerteelektronik vorzugsweise über eine elektronische Schaltung mit mindestens einem Transistor, der bei Berührung der beiden Kontakte 25 und 26 stromdurchlässig geschaltet wird. Durch die Unterbrechung der Stromzufuhr an den PTC-Widerstand 14 wird das Bauteil 11 nicht mehr erwärmt. Der Hub des Arbeitskolbens 13 ist in dieser Position begrenzt.

Da durch die Unterbrechung der Stromzufuhr an den PTC-Widerstand 14 die Erwärmung des Bauteils 11 ausfällt, kühlt sich dasselbe wieder ab. Der Arbeitskolben 13 wird dann durch die Druckfeder 12 und den Federteller 20 entgegen der Richtung des Pfeiles 27 zurückbewegt. Der bewegliche Kontakt 25 wird dadurch ebenfalls in dieser Richtung bewegt, so daß er den Kontakt 26 nicht mehr berührt. Die Stromzufuhr für den PTC-Widerstand 14 setzt dann wieder ein, so daß Arbeitskolben 13, Federteller 20 und Kontakt 25 wieder in Richtung des Pfeiles 26 bis in die hubbegrenzte Position bewegt werden. Diese Position wird dementsprechend sehr genau eingehalten, und zwar durch wechselndes Ein- und Ausschalten der Stromversorgung für den PTC-Widerstand 14.

Die Schalteinheit 21 kann gemäß Fig. 6 auch eine Lichtschranke sein. Als am Federteller 20 befestigter Weggeber 22 ist in diesem Fall ein Schwert 28 mit einer zentralen Öffnung 29 angebracht. Eine aus Lichtsender und Lichtempfänger bestehende Lichtstrecke 30 ist als Wegaufnehmer 23 fest am Gehäuse 9 angeordnet. Die Stromzufuhr an den PTC-Widerstand 14 wird hier unterbrochen, wenn die Lichtstrecke 30 durch die Öffnung 29 des Schwertes 28 freigegeben wird. Für diesen Fall ist die Lichtstrecke 30 wieder über die Leitung 24 mit der Auswerteelektronik verbunden. Ein direktes Abschalten der Stromzufuhr an den PTC-Widerstand 14 wäre dann möglich, wenn die Lichtstrecke 30 in der hubbegrenzten Position durch ein lichtundurchlässiges Schwert unterbrochen würde.

Eine weitere Ausführungsform der Schalteinheit 21 arbeitet gemäß Fig. 7 beispielsweise mit einem CCD-Array 31. Sie weist als Weggeber 22 einen Schieber 32 auf, der mit dem Federteller 20 verbunden ist und bei einer Bewegung desselben in Richtung des Doppelpfeils 33 bewegt wird. Am Schieber 32 ist eine Abdeckung 34 angebracht, die über dem als Wegaufnehmer 23 dienenden, feststehenden CCD-Array 31 positioniert ist. Es ist elektrisch über die Leitung 24 mit einer Auswerteelektronik verbunden.

In einer Leiterplatte 35 ist eine Lichtquelle 36 angebracht, bei der es sich beispielsweise um eine LED handelt. Das Licht der Lichtquelle 36 wird beispielsweise mittels eines Prismas so geführt, daß es als Lichtkegel von oben auf die Abdeckung 34 fällt. In der Abdeckung 34 ist eine als Schlitz ausgebildete Blende 37 vorhanden, durch welche das Licht auf das darunter befindliche CCD-Array 31 fällt. Das dadurch auf dem CCD-Array 31 erzeugte Lichtmuster ist ein Streifen. Bei einer Bewegung des Schiebers 32 in Richtung des Doppelpfeils 33 wird der Streifen relativ zum feststehenden CCD-Array 31 bewegt. Er erzeugt dabei auf der Rückseite desselben ein korrespondierendes Spannungsmusterhier also auch einen Streifen -, das der Auswerteelektronik zugeführt und von dieser ausgewertet wird. Die Länge des CCD-Arrays 31 ist ebenso wie die einem maximalen Hub des Arbeitskolbens 13 von beispielsweise 4 mm entsprechende Länge in der Auswerteelektronik gespeichert. Sie wird von der Auswerteelektronik während des Betriebs der Anordnung überwacht. Wenn der Arbeitskolben 13 des Bauteils 11 seinen maximalen Hub durchgeführt hat, dann hat auch der Streifen seinen in der Auswerteelektronik gespeicherten maximalen Weg über dem CCD-Array 31 zurückgelegt. Die Stromzufuhr an den PTC-Widerstand 14 wird dann unterbrochen und das Bauteil 11 geht mit seinem Arbeitskolben 13 - wie grundsätzlich schon geschildert - in seine Ausgangsposition zurück.

Die Schalteinheit 21 kann gemäß Fig. 8 auch mit magnetischen Komponenten ausgerüstet sein. Als Weggeber 22 dient dabei ein mit dem Federteller 20 gekoppelter Dauermagnet 38, der in Richtung des Doppelpfeiles 39 parallel zu einem als Wegaufnehmer 23 dienenden Magnetfeldaufnehmer 40 bewegt wird, welcher über die Leitung 24 mit der Auswerteelektronik verbunden ist.

Für die Schalteinheit 21 kann gemäß Fig. 9 auch ein Dehnungsmeßstreifen 41 verwendet werden, der als Wegaufnehmer 23 mit der Auswerteelektronik verbunden ist. Der Dehnungsmeßstreifen 41 wird durch einen mit dem Federteller 20 verbundenen Stift 42 als Weggeber 22 verbogen. Die dadurch erfolgende Änderung seines elektrischen Widerstandswerts wird mittels der Auswerteelektronik im schon geschilderten Sinne zur Hubbegrenzung des Arbeitskolbens 13 des Bauteils 11 ausgewertet.

## Patentansprüche

1. Anordnung zum Verstellen eines Ventils, das einen unter der Wirkung einer Rückstellfeder stehenden Stößel aufweist, bei welcher in einem am Ventil anzubringenden Gehäuse ein temperaturabhängiges, mit einem Arbeitskolben zusammenwirkendes Stellelement angeordnet ist, welches als aus einer Legierung mit einprägbarem Formgedächtnis bestehendes metallisches Bauteil ausgebildet und einschließlich Arbeitskolben in Bewegungsrichtung des Stößels zwischen zwei Endstellungen verstellbar ist, welche der Offenstellung des Ventils einerseits und essen Schheßstellung andererseits entsprechen, bei welcher das metallische Bauteil bei Erwärmung in seiner ersten Endstellung eine dem eingeprägten Formgedächtnis entsprechende Form einnimmt, bei welcher in dem Gehäuse eine auf das metallische Bauteil einwirkende Druckfeder angebracht ist, durch welche dasselbe bei Fortfall der Erwärmung in seiner zweiten Endstellung gehalten ist, bei welcher zwischen dem Bauteil und der Druckfeder ein Federteller aus mechanisch stabilem Kunststoff angeordnet ist, in dem auf der dem Bauteil zugewandten Seite ein PTC-Widerstand als elektrisches Heizelement integriert ist, und bei welcher in Montageposition des Gehäuses der Stößel des Ventils durch axiale Bewegung des Arbeitskolbens in seiner Achsrichtung verstellbar ist, **dadurch gekennzeichnet,**
- **daß** innerhalb des Gehäuses (9) in an sich bekannter Weise eine Schalteinheit (21) zur Begrenzung der Hubbewegung des Arbeitskolbens (13) des Stellelements angebracht ist, welche aus einem mit dem Stellelement gekoppelten beweglichen ersten Teil und einem feststehenden zweiten Teil besteht und welche nach dem Verbinden des PTC-Widerstandes (14) mit einer Spannungsquelle die Stromzufuhr an denselben beim Erreichen einer einem vorgegebenen Hub entsprechenden Position des Arbeitskolbens (13) abschaltet und beim Verlassen dieser Position wieder einschaltet und
- **daß** der bewegliche erste Teil der Schalteinheit (21) mit dem den PTC-Widerstand tragenden Federteller (20) gekoppelt ist.

2. Anordnung nach Anspruch 1, **dadurch gekennzeichnet, daß** der zweite Teil der Schalteinheit (21) an eine Auswerteelektronik angeschlossen ist.

3. Anordnung nach Anspruch 1 oder 2, **dadurch gekennzeichnet, daß** die Schalteinheit (21) mit einem CCD-Array (31) ausgerüstet ist.

4. Anordnung nach Anspruch 1 oder 2, **dadurch gekennzeichnet, daß** die Schalteinheit eine optische Meßstrecke mit einer Lichtschranke ist.

5. Anordnung nach Anspruch 1 oder 2, **dadurch gekennzeichnet, daß** die Schalteinheit (21) eine mit magnetischen Komponenten ausgerüstete Meßstrecke ist.

6. Anordnung nach Anspruch 1 oder 2, **dadurch gekennzeichnet, daß** die Schalteinheit (21) mit einem Dehnungsmeßstreifen (41) ausgerüstet ist, dessen elektrischer Widerstand veränderbar ist.
